# FASCICULE DE BREVET EUROPEEN

(11) **EP 2 817 088 B1**
(45) Date de publication et mention de la délivrance du brevet: **01.07.2020**
(21) Numéro de dépôt: 13707596.6
(22) Date de dépôt: 22.02.2013
(51) Int. Cl.: B01F 5/06, B01F 13/00, B01L 3/00

(54) **MICROCANAL AVEC DISPOSITIF D'OUVERTURE ET/OU FERMETURE ET/OU POMPAGE**
MIKROKANAL MIT VORRICHTUNG ZUM ÖFFNEN UND/ODER SCHLIESSEN UND/ODER PUMPEN
MICROCHANNEL WITH DEVICE FOR OPENING AND/OR CLOSING AND/OR PUMPING

(30) Priorité: 24.02.2012 FR 1251722
(43) Date de publication de la demande: 31.12.2014
(73) Titulaire: Ecole Supérieure de Physique et de Chimie Industrielles de la Ville de Paris, 75005 Paris (FR); CENTRE NATIONAL DE LA RECHERCHE SCIENTIFIQUE - CNRS, 75016 Paris 16 (FR)
(72) Inventeur: VERGNE, Clémence, F-75015 Paris (FR); TABELING, Patrick, F-75013 Paris (FR); TRAN, Yvette, F-75013 Paris (FR); MONTI, Fabrice, F-91160 Saulx les Chartreux (FR); DEVYS, Lucie, F-91120 Palaiseau (FR)
(74) Mandataire: Ipside
(86) Numéro de dépôt international: PCT/EP2013/053612
(87) Numéro de publication internationale: WO 2013/124448

(56) Documents cités:
- WO-A2-01/07506
- WO-A2-2004/023105
- WO-A2-2008/049413
- DE-A1- 10 157 317
- DE-A1-102004 062 893
- US-A1- 2007 280 858
- BALDI A ET AL: "A hydrogel-actuated environmentally sensitive microvalve for active flow control", JOURNAL OF MICROELECTROMECHANICAL SYSTEMS, IEEE SERVICE CENTER, US, vol. 12, no. 5, 5 octobre 2003 (2003-10-05), pages 613-621, XP011102672, ISSN: 1057-7157, DOI: 10.1109/JMEMS.2003.818070

## Description

La présente invention concerne le domaine des systèmes microfluidiques, et plus particulièrement un microcanal, et son procédé de fabrication, comportant un dispositif d'ouverture et/ou fermeture et/ou pompage.

Les système microfluidiques sont de plus en plus utilisés dans des domaines aussi variés que la chimie, la biologie, la physique, l'analyse, le diagnostic, le criblage .... Il en existe différents types, et notamment ceux mettant en œuvre un substrat servant de socle ou support. Les substrats utilisées sont en matériau massif choisi parmi le verre, le silicium, le métal, les polymères, ou une combinaison de tous ces matériaux.

Dans ce type de systèmes microfluidiques des microcanaux peuvent être gravés dans le substrat par toute méthode connue. Une pièce massive ou en couche mince vient ensuite recouvrir le substrat, délimitant ainsi la géométrie des microcanaux. Les microcanaux peuvent également être obtenus par moulage d'un élastomère dans un moule approprié puis disposés sur un substrat. Ces microcanaux peuvent être agencés pour former un réseau dans lequel des fluides circulent.

Afin de pouvoir contrôler les mouvements des fluides, il est souvent avantageux d'intégrer des vannes et des pompes dans le réseau microfluidique.

Toutefois, pour permettre l'intégration des vannes et des pompes, de nombreux obstacles doivent être surmontés. De plus, les systèmes de vannes connus présentent des limitations importantes.

Par exemple, lors du processus de fabrication des systèmes de vannes, de nombreuses étapes sont nécessaires et elles requièrent fréquemment la mise en oeuvre de matériaux spécifiques qui en limitent l'applicabilité.

Un autre inconvénient des systèmes de vannes connus est leur taille, typiquement supérieure à 50 microns, ce qui en limite leur nombre sur un système microfluidique.

Diverses solutions ont été proposées dans le passé pour tenter de résoudre ces problèmes.

Ainsi, le brevet US 6,408,878 propose un procédé de fabrication d'une structure en élastomère moulée pour former des microvannes utilisées pour fermer ou ouvrir des microcanaux d'un système microfluidique. Le procédé comprenant les étapes suivantes:
- formation d'une première couche d'élastomère au dessus d'un premier moule micro-usiné, ce premier moule ayant une protrusion sur sa face supérieure qui crée un renfoncement sur la surface inférieure de ladite première couche d'élastomère,
- formation d'une seconde couche d'élastomère au dessus d'un second moule micro-usiné, ce second moule ayant une protrusion sur sa face supérieure qui crée un renfoncement sur la surface inférieure de la ladite seconde couche d'élastomère,
- application de la surface inférieure de la seconde couche d'élastomère sur la surface supérieure de la première couche d'élastomère de sorte qu'un premier canal soit formé dans le renfoncement entre la première et la seconde couche d'élastomère,
- positionnement de la première couche d'élastomère au dessus d'un substrat plat de telle sorte qu'un second canal fluidique soit créé dans le renfoncement entre la première couche d'élastomère et le substrat.

De cette manière, en appliquant par l'intermédiaire d'un fluide liquide ou gazeux une pression dans le premier canal, on déforme la surface supérieure de la première couche et on ferme ainsi le second canal fluidique.

Ces dispositifs possèdent néanmoins de nombreux inconvénients et en particulier:
- ils nécessitent des circuits externes, comprenant tubes et vannes, pour alimenter et commander les pressions dans les canaux microfluidiques de contrôle. Ces circuits externes sont d'autant plus complexes que le nombre de vannes intégrées sur le système microfluidique est élevé.
- la fabrication de vannes submicrométriques suivant le procédé est longue et couteuse. Une telle fabrication nécessite des masques de précision submicrométrique et des membranes d'élastomère d'épaisseur très faible. En effet, c'est la déformation de cette membrane à l'intérieur du canal à contrôler qui en assure la fermeture ou l'ouverture. Or, cette fermeture n'est réalisée que si la membrane déformée vient obstruer dans son intégralité la section du microcanal en question. Cela impose des épaisseurs très petites devant les dimensions de la section du microcanal et donc une grande fragilité. De plus, le contrôle de la pression du fluide dans le premier canal doit être très faible et le contrôle de cette pression très précis.
- enfin, le procédé impose d'utiliser un élastomère comme matériau, ce qui en limite les domaines d'application.

Le brevet US 6,488,872, propose également un procédé de fabrication de microvannes utilisées pour fermer ou ouvrir des microcanaux d'un système microfluidique. Le procédé comprend les étapes suivantes:
- dans une étape préliminaire on positionne des piliers dans les microcanaux,
- on remplit les microcanaux par une solution de monomères photoréticulables,
- on soumet, à travers un masque par exemple obtenu par un procédé photolithographique, la dite solution de monomères à un rayonnement UV autour des piliers. Sous l'effet de ce rayonnement la polymérisation/réticulation des monomères en solution s'effectue autour des piliers, qui se recouvrent alors d'une couche solide de polymère. On choisit un monomère tel que la dite couche solide possède la propriété de changer de volume en présence d'un stimulus (par exemple une variation de pH ou de température du fluide autour des dits piliers),

Ainsi, pour actionner les microvannes, on applique le stimulus en question au niveau des piliers, ce qui a pour effet de faire gonfler la couche jusqu'à obturer le microsystème.

Ces dispositifs possèdent également de nombreux inconvénients et en particulier:
- la fabrication nécessite de nombreuses étapes: remplissage, photopolymerisation, rinçage,
- l'étape de photopolymérisation nécessite une précision micrométrique pour pouvoir aligner le masque avec les piliers. De plus, le système optique permettant l'illumination doit permettre d'éviter les phénomènes de réflexion et de diffusion des rayons UV. En effet, de tels phénomènes auraient un effet destructeur en provoquant des polymérisations à des endroits non souhaités, ce qui aurait pour effet de boucher les microcanaux aux dits endroits non souhaités,
- l'adhésion des polymères sur les piliers est faible et incontrôlée, ce qui entraine beaucoup d'inconvénients.

Le brevet US 7,988,685 met en œuvre, comme dans le brevet US 6,408,878, deux réseaux de micocanaux séparés par une membrane mais la commande est assurée non par une variation de la pression dans l'un des deux réseaux mais par le gonflement provoqué d'un hydrogel présent dans le microcanal de contrôle, ce qui déforme la membrane et vient fermer le canal. WO 01/075060 A2 et DE 101 57 317 A1 propose également un procédé de fabrication de microvannes utilisées pour fermer ou ouvrir des microcanaux.

Ces dispositifs cumulent néanmoins les inconvénients décrits ci-dessus à propos des deux premiers brevets cités: utilisation d'un élastomère, difficultés de fabrication, impossibilité de réduire les dimensions dans le domaine submicronique, etc.

La présente invention a donc pour objet de pallier un ou plusieurs des inconvénients de l'art antérieur en proposant un dispositif d'ouverture et/ou fermeture et/ou pompage de microcanal. Le dispositif est simple à mettre en ouvre et ne nécessite pas d'étape complexe dans sa réalisation.

Pour cela la présente invention propose un microcanal formé à l'interface de deux couches de matériau, au moins un des deux matériaux étant un substrat un film de polymère étant fixé sur la couche de substrat dans un volume du microcanal ; ledit film de polymère étant formé d'un matériau de type hydrogel susceptible de subir des variations de volume sous l'action d'un stimulus extérieur,la couche de polymère de type hydrogel étant greffée sur le substrat par liaison covalente.

La présence de l'hydrogel dans les microcanaux permet, sous l'effet d'un des stimuli décrits, de fermer ou d'ouvrir les microcanaux. C'est donc la couche de polymère greffé dans le microcanal qui joue le rôle de microvannes ou de micropompes au niveau du microcanal. La liaison covalente permet un gonflement vertical, et permet de s'affranchir des contraintes mécaniques de cisaillement entre l'hydrogel et la surface du substrat sur laquelle il est attaché.

Selon un mode de réalisation de l'invention, le polymère de type hydrogel est choisi parmi ceux sensibles aux variations de température, de lumière, de champ électrique ou de pH.

L'invention concerne également un système microfluidique caractérisé en ce qu'il comporte au moins un microcanal selon l'invention.

L'invention concerne également, un procédé de fabrication comprenant au moins une étape de fixation par liaison covalente d'un polymère de type hydrogel sur un substrat, le polymère de type hydrogel étant susceptible de subir des variations de volume sous l'action d'un stimulus extérieur, sur une face d'un substrat disposé dans le volume d'un microcanal formé à l'interface de deux couches de matériau, au moins un des deux matériaux étant le substrat.

Selon un mode de réalisation de l'invention, l'étape de fixation du polymère de type hydrogel sur le substrat est réalisée hors du microcanal.

Selon un mode de réalisation de l'invention, l'étape de greffage comprend deux phases, une phase de modification chimique du polymère de type hydrogel et une phase de modification des propriétés chimiques de surface du substrat.

Selon un mode de réalisation de l'invention, l'étape de greffage est précédée d'une phase de synthèse du polymère de type hydrogel.

Selon un mode de réalisation de l'invention, le polymère de type hydrogel est synthétisé par réticulation entre chaines de polymère fonctionnalisées, la synthèse des chaînes de polymère étant faite par copolymérisation radicalaire.

Selon un mode de réalisation de l'invention, la modification chimique des polymères est une amidification au moyen d'une amine comportant au moins un groupe vinylique.

D'autres buts, caractéristiques et avantages de l'invention seront mieux compris et apparaîtront plus clairement à la lecture de la description faite, ci-après, en se référant aux figures annexées et données à titre d'exemple :
- la figure 1 est une vue de dessus d'un exemple de réseau de microcanaux,
- les figures 2 à 4 décrivent les dispositifs mis en œuvre à différentes étapes d'un exemple de procédé de fabrication de microcanaux :

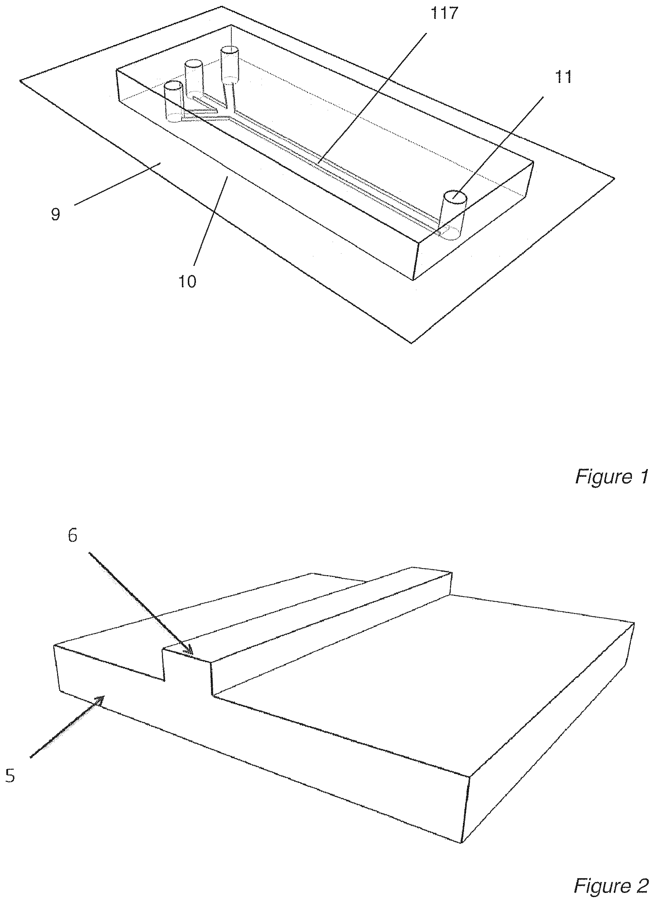

- la figure 2 représente un exemple de moule micro-usiné,

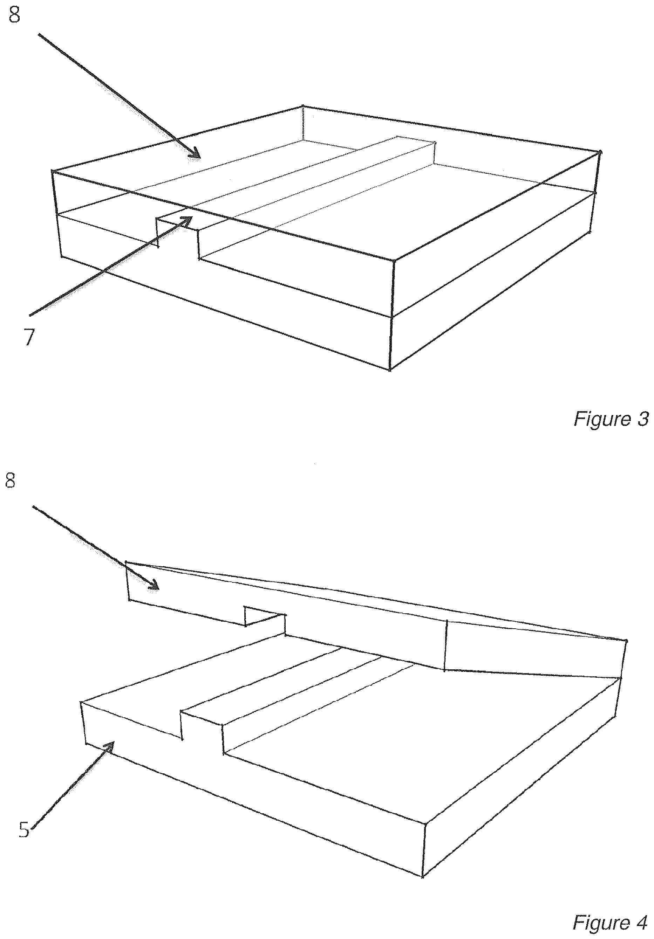

- la figure 3 représente le moulage d'une couche d'élastomère sur le moule micro-usiné,
- la figure 4 représente la couche d'élastomère séparée du moule micro-usiné,

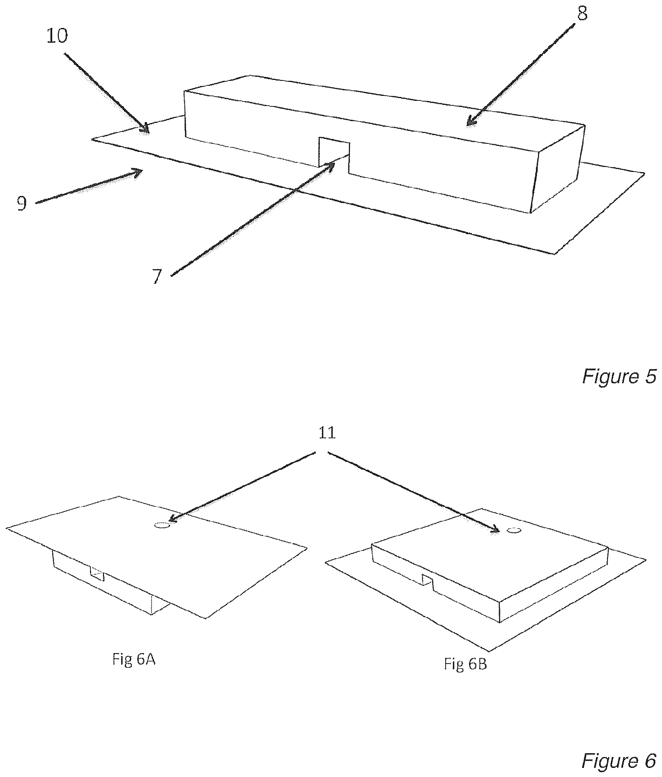

- la figure 5 représente un microcanal formé par la superposition de la couche d'élastomère et d'un substrat,
- les figures 6A et 6B présentent deux exemples d'un microcanal selon un mode de réalisation de l'invention,

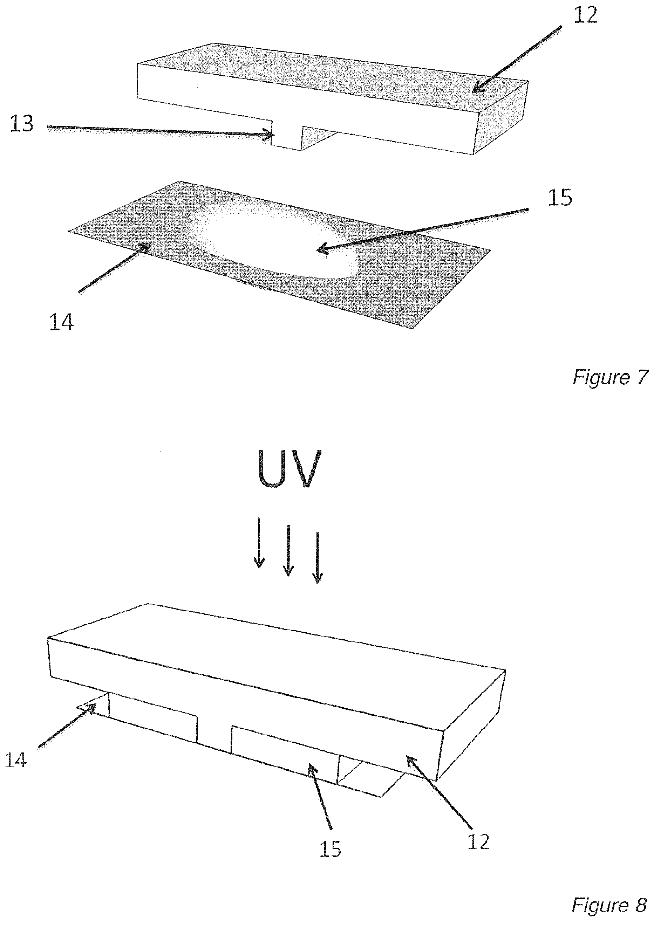

- la figure 7 représente un moule en élastomère au-dessus d'un substrat sur lequel est déposée une goutte de liquide photoréticulable,
- la figure 8 représente la superposition du moule en élastomère et du substrat sur lequel est déposée une goutte de liquide photoréticulable, et l'illumination UV destinée à produire la réticulation du liquide photoréticulable,

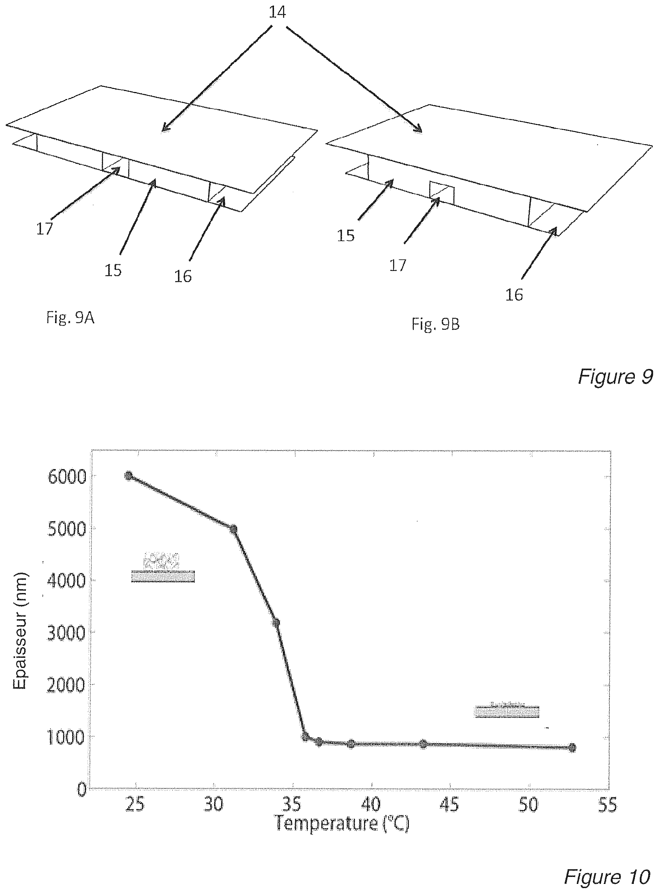

- les figures 9A et 9B représentent le microsystème obtenu après superposition du premier substrat et du matériau réticulé avec le second substrat,
- la figure 10 représente une modification de l'épaisseur du film d'hydrogel en fonction de la température,

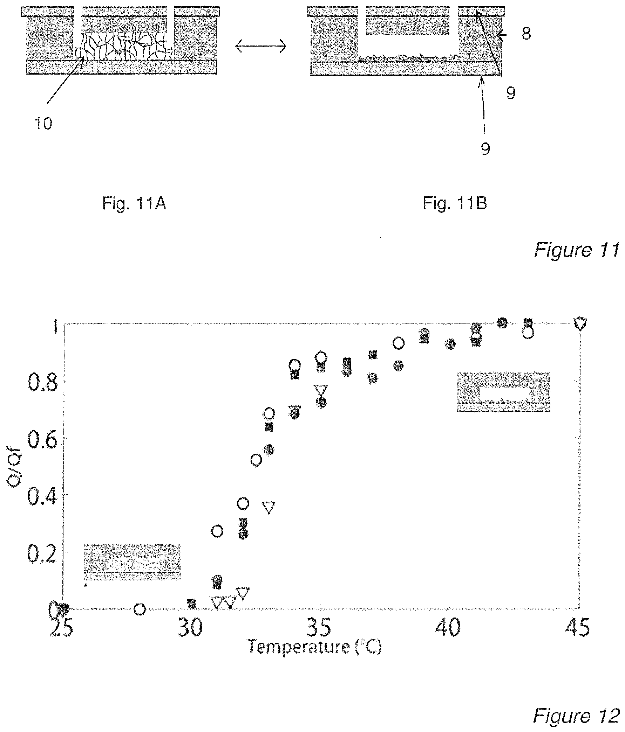

- la figure 11 est une illustration du principe de vannes créé par l'activation thermique de l'hydrogel : la figure 11A est une vue en coupe du microsystème pour une température inférieure à 32°C, l'hydrogel est déplié et obstrue le microcanal, la figure 11B est une vue en coupe du microsystème pour une température supérieure à 32°, l'hydrogel est replié et le microcanal est ouvert,
- la figure 12 montre l'évolution du débit (normalisé par un débit de référence Qf) le long d'un microcanal de 4 microns de haut, soumis à une différence de pression de 3bars. Chaque symbole correspond à des expériences réalisées dans les mêmes conditions,

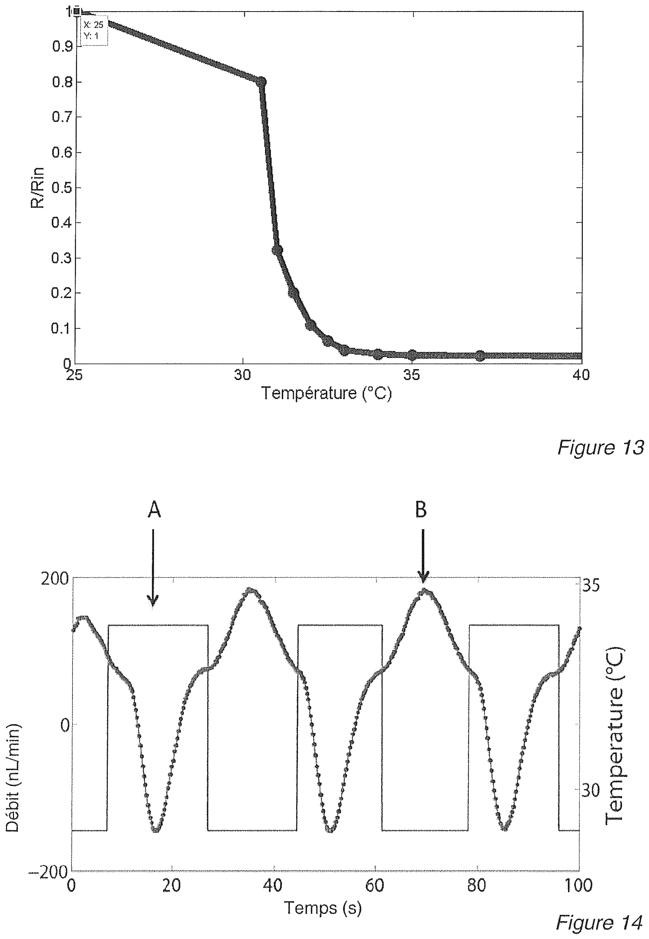

- la figure 13 montre un exemple d'évolution de la résistance hydrodynamique normalisée d'un microcanal en fonction de la température dans un canal de 7 microns de haut,
- la figure 14 montre comment la réalisation d'une micropompe par activation thermique de l'hydrogel.

Les microcanaux concernés par la présente invention (dont un exemple est illustré figure 1) sont réalisés par une étape de mise en forme d'un matériau. Par exemple, cette étape de mise en forme peut être réalisée par gravure, par micro-usinage de verre ou de silicium, par différentes techniques de moulage avec des polymères : thermoformage ou moulage à chaud, ablation de polymère, ou moulage de polymère.

Selon la technique utilisée les matériaux mis en œuvre peuvent être tout types de polymères, et par exemple des polymères tels que le polystyrène (PS), le polycarbonate (PC), le polyvinyl chloride (PVC), des Cyclic Olefin Copolymers (COC), le Poly(Metyl methacrylate) (PMMA), le thermoset Polyester (TPE), le Polyurethane Methacrylate (PUMA), ou encore des Acrylonitrile Butadiène Styrènes.

Les matériaux peuvent également être choisis parmi les liquides ou colles photoréticulables ou photosensibles, par exemple la Norland Optical Adhesive (NOA).

Une fois la mise en forme du matériau réalisée, le matériau est positionné sur une couche d'un substrat plat sur lequel une couche d'un polymère de type hydrogel est greffée de manière covalente. Le matériau moulé est positionné de façon à ce que le renfoncement, créé par le moulage, la gravure ou l'usinage, forme un canal microfluidique du côté de l'hydrogel.

Le microcanal (7, 17) (figures 5 et 9) est ainsi formé à l'interface de deux couches de matériau, au moins un des deux matériaux étant un substrat (9, 14, 15, 16). Un volume du microcanal est contenu dans le renfoncement formé dans le matériau.

Le polymère de type hydrogel à greffer, utilisé dans le cadre de la présente invention et contenu dans le volume du microcanal, est un polymère insoluble dans l'eau et capable de constituer un gel avec un grand pouvoir absorbant en présence d'un liquide ou fluide. Ces polymères possèdent un haut degré de flexibilité. En effet, il est possible d'augmenter leur volume sous l'action d'un stimulus de type variation de température, de lumière, de pH, de champ électrique. Le polymère de type hydrogel à greffer est greffé de façon à pouvoir à s'expandre perpendiculairement à son plan de fixation, c'est-à-dire pouvoir gonfler verticalement. Les contraintes sur le polymère de type hydrogel sont donc perpendiculaires à la surface et ne risquent pas de provoquer des ruptures de l'attachement au support.

Dans le cadre de l'invention, le polymère de type hydrogel est greffé avec des liaisons covalentes sur un support dans le microcanal.

Selon un mode de réalisation de l'invention, le polymère de type hydrogel est greffé sur le support avant son insertion dans le microcanal, c'est-à-dire hors du microcanal.

Selon un mode de réalisation de l'invention, le polymère de type hydrogel est greffé sur le support lorsque le support est déjà dans le microcanal.

La présence du polymère greffé (hydrogel) dans les microcanaux a pour but de permettre, sous l'effet d'un des stimuli décrits, de fermer ou d'ouvrir lesdits microcanaux. C'est donc la couche de polymère greffé dans le microcanal qui joue le rôle de microvannes ou de micropompes au niveau du microcanal.

Le polymère greffé sous forme de couche sur le substrat est simple à mettre en œuvre et ne nécessite pas de technique particulière. Notamment, il n'est pas nécessaire, comme cela est le cas dans l'art antérieur, de creuser le substrat au niveau des microcanaux pour y inclure le polymère de type hydrogel.

Les microcanaux selon l'invention se différencient ainsi de ceux de l'art antérieur par le fait qu'ils comportent une couche d'hydrogel déposé sur le substrat en contact avec l'ouverture formant le canal.

Les figures 2 à 5 illustrent une premier mode de réalisation d'un microcanal selon l'invention. Un premier moule (5) est fabriqué par toute méthode connue : micro-usinage, photolithographie, ablation laser, micro-injection, etc. et possède une protrusion (6).

Un élastomère (8) est coulé sur ce moule (figure 2), puis solidifié thermiquement, de telle sorte qu'un renfoncement (7) soit créé dans l'élastomère (8), correspondant à l'image inversée de la protrusion (6) (figure 3).

L'élastomère (8) est ensuite retiré du moule (5), comme illustré sur la figure 4, puis positionné au-dessus du substrat plat (9) sur lequel le polymère de type hydrogel (10) est greffé de manière covalente (figure 5).

La structure en élastomère (8) est ensuite collée au substrat (9) du côté de l'hydrogel (10), le renfoncement (7) formant ainsi un canal microfluidique dans lequel des fluides peuvent être amenés par des trous (11) percés soit sur le substrat (figure 6A) soit sur l'élastomère (figure 6B).

La structure en élastomère peut être collée de manière réversible sur le substrat, ou de manière irréversible. Il est possible de superposer à ce système une autre couche d'élastomère dans laquelle on peut faire circuler un fluide chargé, servant d'électrode liquide lorsque l'on désire utiliser un champ électrique comme stimulus.

Cette technique permet, si on désire utiliser un champ électrique comme stimulus, de superposer à ce système une autre couche d'élastomère dans laquelle on peut faire circuler un fluide chargé, servant d'électrode liquide.

Les figures 7 et 8 illustrent un deuxième mode de réalisation du procédé selon l'invention. Ce deuxième mode de réalisation utilise un moule, appelé timbre, fait dans un matériau élastomère (12) et comprenant un profil complémentaire (13) de celui du microcanal que l'on veut réaliser. Le moule est construit selon la méthode décrite précédemment.

Un premier substrat plat (14) en matériau solide est placé de manière parallèle à ce timbre (12). Un liquide photoréticulable ou photosensible (15) en quantité suffisante est déposé sur le substrat (14). Le timbre (12) est placé sur le substrat (14). Comme illustré sur la figure 8, en exerçant une pression sur le timbre (12), le liquide (15) occupe les espaces creux du timbre en élastomère. Le liquide est ensuite traité par irradiation ou par chauffage jusqu'à sa réticulation. Le timbre est retiré du système constitué du premier substrat (14) et du matériau réticulé (15). Ledit système est déposé sur un second substrat (16), second substrat sur lequel est greffé l'hydrogel.

Avec cette technique, le microcanal (17) peut être séparé du premier substrat (14) par une fine couche de matériau réticulé (15) comme montré sur la figure 9B, ou peut être en contact avec le premier substrat (14) comme montré sur la figure 9A.

Le matériau formant les microcanaux peut être fixé ou collé de manière réversible ou irréversible, sur le substrat, ce qui peut être avantageux lorsque de fortes pressions doivent être appliquées.

La réalisation des microvannes ou micropompes intégrées aux microcanaux, et formées par le film d'hydrogel, nécessite au moins : une phase de synthèse d'un polymère, une étape de greffage du polymère. L'étape de greffage comportant une phase de modification chimique du polymère et une phase de modification des propriétés chimiques de surface du substrat.

Pour la synthèse du polymère à greffer, qui peut se faire de différentes méthodes, de nombreux monomères peuvent être utilisés. Le choix du monomère, pour une application donnée, est conditionné par le type de stimulus qui sera utilisé pour actionner la microvanne ou la micropompe. Le polymère à greffer peut ainsi être choisi parmi ceux sensibles aux variations de température, de lumière, de champ électrique ou de pH.
- Si le stimulus est la variation de température, on pourra choisir de faire des polymères à température critique de dissolution inférieure (LCST pour Lower Critical Solution Temperature selon la terminologie anglaise) ou à température critique de dissolution supérieure (UCST pour Upper Critical Solution Temperature selon la terminologie anglaise), et par exemple le Poly N-isopropylacrylamide (PNIPAM),
- Si le stimulus est la variation de lumière on pourra utiliser des polymères du type de ceux sensibles à la température sur lesquels on aura greffé un groupement chromophore, par exemple un groupement azobenzène,
- Si le stimulus est la variation de pH on pourra utiliser des polyélectrolytes faibles, par exemple le Poly(acide acrylique) (PAA), le Poly(méthacrylate de diméthylamino éthyle)(PMADAME) ou encore des polyampholytes faibles, par exemple un PAA-co-PMADAME,
- Si le stimulus est la variation de champ électrique on pourra utiliser des polyélectrolytes par exemple le Poly(acrylamido methyl propane sulfonate) (PAMPS).

Il peut être avantageux d'utiliser des copolymères, en particulier des copolymères possédant des motifs acide acrylique tels que ceux connus sous le nom de PAA, qui permettent la fonctionnalisation nécessaire à la formation de l'hydrogel et à son greffage sur la surface.

La modification chimique des polymères peut être réalisée de plusieurs façons. Cette étape de modification est nécessaire pour pouvoir greffer les hydrogels à l'intérieur des systèmes microfluidiques. La modification chimique peut, par exemple, être une amidification au moyen d'une amine comportant un groupe vinylique. On obtient ainsi un polymère fonctionnalisé.

Les modifications chimiques de la surface du substrat permettant le greffage de l'hydrogel sont réalisées par différentes méthodes. Le but de cette étape est de greffer le polymère fonctionnalisé sur une surface du microsystème modifiée en formant une monocouche auto assemblée (SAM) portant des groupements thiols sur laquelle le polymère fonctionnalisé, mélangé avec un réticulant, est déposé sur ladite surface modifiée.

Lorsque le polymère fonctionnalisé est greffé sur le substrat, et hydraté, il est ainsi possible d'exploiter son augmentation de volume ou gonflement vertical dans un microcanal sous l'effet d'un stimulus. Un tel gonflement vertical de l'hydrogel peut avoir trois effets selon la géométrie du système et les conditions d'application du stimulus :
- il permet de modifier la résistance hydrodynamique du microcanal si celui-ci est plus grand que le gonflement maximal de l'hydrogel,
- il permet d'ouvrir et de fermer le microcanal de manière réversible si sa section est plus petite que la dimension maximale de l'hydrogel gonflé, ce qui crée un système de vannes,
- il permet d'ouvrir et de fermer le microcanal entraînant le déplacement du fluide à l'intérieur du microsystème, ce qui crée un système de pompage de très petite dimension.

Le polymère fonctionnalisé utilisé dans le cadre de l'invention peut être déposé sur le substrat par dépôt mécanique tel que dépôt à la tournette, dépôt par immersion, dépôt par laminage, dépôt par pulvérisation, coulée de solvant et de particules (solvant casting), lixiviation, etc. Dans tous les cas, la couche d'hydrogel est ainsi formée sur le substrat par greffage avec liaison covalente.

Le polymère fonctionnalisé est déposé sur toute la surface du substrat ou sur seulement une partie de la surface du substrat. La partie de la surface du substrat recouverte par l'hydrogel est comprise par exemple entre 1 nm² et 1 mm².

Le polymère greffé anhydre a une épaisseur comprise par exemple entre 1 nanomètre et 10 microns. Le polymère greffé hydraté a une épaisseur comprise par exemple entre 10 nanomètres et 1 millimètre.

Les microcanaux ont une longueur comprise par exemple entre 0,1 nanomètre et 5 millimètres, et de préférence entre 1 nanomètre et 1 millimètre.

Les microcanaux ont une largeur comprise par exemple entre 0,1 nanomètre et 5 millimètre, et de préférence entre 1 nanomètre et 1 millimètre.

Les microcanaux ont une hauteur comprise par exemple entre 0,1 nanomètre et 5 millimètre, et de préférence entre 1 nanomètre et 1 millimètre.

Le substrat est, par exemple, un matériau massif tel que du verre, du silicium, un métal, un polymère, ou encore une combinaison de tous ces matériaux.

Selon une variante, le substrat est recouvert d'un film d'or.

Selon une autre variante, le substrat est transparent aux rayons infrarouges.

Selon une variante, le substrat est choisi dans la famille des Acrylonitrile Butadiène Styrène.

L'invention concerne également un système microfluidique (117) formé par, au moins, un microcanal selon l'invention.

L'invention va maintenant être illustrée avec les exemples suivants non limitatifs.

### Exemples :

### 1. Exemples de procédés de réalisation des microvannes ou micropompes.

La réalisation des microvannes ou micropompes comprend: une phase de synthèse du polymère à greffer, une phase modification chimique du polymère à greffer et une phase de modification des propriétés chimiques de surface du substrat.

### 1.1. Exemple de synthèse du polymère de type hydrogel

Pour réaliser la synthèse du polymère de type hydrogel, un ou plusieurs monomères et un initiateur de réaction sont introduits dans une solution et une méthode de copolymérisation radicalaire est utilisée.

Pour la synthèse d'un copolymère à base d'acide acrylique et de N-isopropylacrylamide (PAA-co-PNIPAM) on utilise un système d'amorçage réducteur-oxydant avec pour couple le persulfate d'ammonium et le métabisulfite de sodium : (NH₄)₂S₂O₈/Na₂S₂O₅.

Un copolymère PAA-co-PNIPAM à 90% de motif NIPAM est obtenu après mélange de 90% de NIPAM et 10% de AA.

On introduit ensuite des solutions de (NH₄)₂S₂O₈ et de Na₂S₂O₅ et on active la polymérisation en présence du système redox.

Après dialyse et lyophilisation on obtient le polymère sous forme solide.

### 1.2. Exemples de modifications chimiques pour permettre le greffage des hydrogels sur le substrat

La modification chimique du polymère à greffer peut être une amidification, c'est à dire une réaction entre une amine possédant un groupe vinylique et une partie des motifs acide acrylique.

Dans le cas d'un PAA-co-PNIPAM à 10% de motifs AA, on peut modifier une partie des groupements acides acryliques en leur greffant un allylamine.

Pour cela on introduit une quantité stœchiométrique d'allylamine par rapport à la quantité de motifs acide acrylique que l'on veut modifier.

On mélange le PAA-co-PNIPAM, l'allylamine ainsi que le chlorhydrate de 1-(3-diméthylaminopropyl)-3-éthyl carbodiimide noté EDC.

En présence d'EDC, les fonctions carboxyliques du squelette du PAA permettent le greffage des fonctions amines sur ces dernières.

Une fois la synthèse terminée, on dialyse et lyophilise. On obtient ainsi le polymère fonctionnalisé sous forme solide.

### 1.3. Exemples de greffage de l'hydrogel

Sont décrits ici deux exemples de méthode permettant de greffer l'hydrogel sur une surface du microsystème modifiée en formant une monocouche auto assemblée (SAM) permettant de greffer des groupements thiols sur laquelle le polymère fonctionnalisé, mélangé avec un réticulant, est déposé .

### 1.3.1. Exemple d'une première méthode

Un microcanal est fabriqué selon les méthodes décrites sur les figures 2 à 9. Pour modifier la surface, sur laquelle le polymère de type hydrogel va être greffé, on soumet ladite surface à une solution contenant un composé thiolé et un solvant. On rince ensuite cette surface avec ce même solvant.

Par exemple, si la surface est recouverte d'or la solution peut être un mélange de dithiolerytrhitol à 0,3 millimolaire dans du chloroforme et le solvant utilisé dans ce cas pour rincer la surface est du chloroforme.

Afin de réaliser le greffage de l'hydrogel sur le substrat, on le solubilise dans un mélange de solvant et de réticulant et on introduit cette solution dans le microsystème. Après réticulation, le système est rincé avec ce même solvant.

### 1.3.2. Exemple d'une deuxième méthode

Dans cet exemple, l'hydrogel est préalablement greffé sur une surface d'un substrat et Un microcanal est ensuite fabriqué à partir de ce substrat selon les méthodes décrites sur les figures 2 à 9.

Pour cela il est nécessaire de tout d'abord modifier la surface puis de greffer l'hydrogel.

Cette première étape est réalisée par silanisation, dans le cas d'un substrat de verre, par voie liquide en immergeant le verre en question dans un mélange à 3% de Mercaptopropyltrimethoxysilane dans du toluène.

L'étape suivante est réalisée par dépôt mécanique. Par exemple, le polymère fonctionnalisé initialement sous forme solide est solubilisé dans un mélange de solvant, par exemple du butanol, et d'un thiol, par exemple du dithiolerythritol. La solution ainsi élaborée est déposée à la tournette sur le verre silanisé.

### 2. Exemples de mise en œuvre de microvannes ou micropompes.

Comme cela a déjà été expliqué, plusieurs types de monomères et de réticulant, dans différentes proportions peuvent être choisis selon le stimulus choisi.

Si le stimulus est la température, il s'agit de copolymères de motifs acide acrylique (AA) et N-isopropylacrylamide(NIPAM) qui subit une transition réversible autour de sa LCST typiquement de l'ordre de 32°C. A une température inférieure ce copolymère est hydrophile et déplié en solution aqueuse alors qu'à une température supérieure il devient hydrophobe et se replie sur lui-même.

La synthèse du copolymère est réalisée selon une des deux méthodes décrites précédemment. On obtient un copolymère statistique dans lequel les unités monomères sont réparties de manière aléatoire dans la chaîne.

La fonction NIPAM est celle qui est responsable de l'activation par la température, la fonction AA sert elle, après modification, au greffage du polymère sur la surface. Dans ce cas le polymère utilisé est un P(AA-co-NIPAM) à 10% de motif AA.

La modification du copolymère est également réalisée selon la méthode décrite précédemment. La modification de la lame de verre que l'on utilise comme substrat est réalisée par silanisation selon la méthode décrite précédemment

Une fois cette surface traitée, un mélange de PAA-co-PNIPAM, butanol, dithiol, est déposé à la tournette sur celle-ci.

L'épaisseur du film peut être caractérisée en fonction de la température par ellipsométrie. Dans cet exemple, l'épaisseur du film d'hydrogel décroît lorsque la température croit comme montré sur la figure 10.

Les microcanaux sont réalisés dans un matériau dur, appelé NOA (Norland Optical Adhesive), selon l'une des méthodes décrites précédemment. On obtient un système possédant trois parois en NOA et une paroi en verre traitée avec l'hydrogel.

Dans cet exemple, la hauteur des microcanaux peut être comprise entre 1 et 10 microns, et de préférence entre 4 et 7 microns.

La variation de température est obtenue de toute manière connue. Ainsi, pour chauffer on peut illuminer le polymère par un rayonnement électromagnétique à des fréquences correspondant à des pics d'absorption ou encore utiliser une résistance parcourue par un courant électrique. Pour refroidir il est possible d'utiliser par exemple un module à effet Peltier.

La figure 11 est une illustration du principe mis en œuvre dans une microvanne lors de l'activation thermique de l'hydrogel. Si la pression dans le microcanal est maintenue constante, les variations de volume de l'hydrogel induisent un changement de la résistance du microcanal et donc du débit du fluide qui y circule. Il est à noter que la mesure du débit dans le microcanal permet de déduire l'épaisseur de l'hydrogel. Ainsi la figure 11A illustre un microcanal fermé, à une température inférieure à 32°C, et la figure 11B un microcanal ouvert, à une température supérieure à 32°C.

La figure 12 montre l'évolution du débit Q (normalisé par un débit de référence Q_{f}) le long d'un microcanal de 4 microns de haut, soumis à une différence de pression de 0,3 MP. Afin de vérifier la répétabilité des gonflements on a effectué plusieurs cycles de mesure, chacun étant représenté par un symbole.

La figure 13 est une courbe montrant l'évolution de la résistance hydrodynamique du système en fonction de la température dans un microcanal de 7 microns de haut. Avec une telle hauteur utilisée le microcanal n'est pas totalement fermé quand l'hydrogel est à son maximum de gonflement.

Sur la figure 14 la courbe A montre les cycles de température entre 29°C et 34°C et la courbe B l'évolution du débit correspondante. On peut constater que l'écoulement du fluide se fait avec un léger retard par rapport à la variation de température.

Ainsi, le dispositif selon l'invention permet de réaliser des systèmes de pompage en effectuant des cycles d'élévation et diminution de la température.

Il résulte de ce qui vient d'être décrit, qu'il est possible d'utiliser une large gamme de matériaux: élastomère, verre, silicium, polymère, etc . Il est également possible de réaliser des dispositifs adaptés à de larges gammes de pression, d'avoir des propriétés de surfaces adaptées aux applications visées, de choisir le stimulus bien adapté à chaque application considérée.

Il est possible de choisir comme substrat un matériau bon conducteur de la chaleur si le stimulus concerné est la température.

De même, on peut choisir de déposer des électrodes liquides ou solides, par exemple sous forme de films minces sur les deux surfaces qui se font face à l'intérieur du microsystème.

De même, on peut utiliser un matériau transparent aux longueurs d'ondes permettant d'activer le polymère dans le cas ou le stimulus est la lumière.

Le traitement du substrat avec l'hydrogel peut être fait une fois le microsystème fermé ou être fait avant et être intégré ultérieurement.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Procédé de fabrication d'un microcanal, **caractérisé en ce qu'**il comprend au moins :
- une étape de fixation par liaison covalente d'un polymère de type hydrogel sur une face d'un substrat, le polymère de type hydrogel étant susceptible de subir des variations de volume sous l'action d'un stimulus extérieur ;
- une étape de formation dudit microcanal à l'interface de deux couches de matériau, au moins un des deux matériaux étant le substrat, de manière que le polymère est disposé dans le volume dudit microcanal ;
et **en ce que** :
- l'étape de fixation du polymère est réalisée avant l'étape de formation du microcanal ;
- ladite face du substrat est plate ;
- lesdites variations de volume étant réalisées perpendiculairement à ladite face du substrat ;
- le polymère modifiant la résistance hydrodynamique du microcanal de manière réversible.

2. Procédé selon la revendication 1, dans lequel l'étape de greffage comprend deux phases, une phase de modification chimique du polymère de type hydrogel et une phase de modification des propriétés chimiques de surface du substrat.

3. Procédé selon une des revendications 1 ou 2, dans lequel l'étape de greffage est précédée d'une phase de synthèse du polymère de type hydrogel.

4. Procédé selon la revendication 3, dans lequel le polymère de type hydrogel est synthétisé par réticulation entre chaines de polymère fonctionnalisées, la synthèse des chaînes de polymère étant faite par copolymérisation radicalaire.

5. Procédé selon une des revendications 2 à 5, dans lequel la modification chimique des polymères est une amidification au moyen d'une amine comportant au moins un groupe vinylique

6. Microcanal (7, 17) formé à l'interface de deux couches de matériau à l'aide du procédé selon l'une quelconque des revendications précédentes, au moins un des deux matériaux étant un substrat (9, 14, 15, 16), un film (10) de polymère étant fixé sur la couche de substrat dans un volume du microcanal (7, 17), ledit film de polymère étant formé d'un matériau de type hydrogel susceptible de subir des variations de volume sous l'action d'un stimulus extérieur,
**caractérisé en ce que** :
- le substrat du film est plat ;
- le film est greffé sur le substrat plat par liaison covalente ;
- le film est adapté pour modifier de manière réversible la résistance hydrodynamique du microcanal en gonflant perpendiculairement à son substrat ;
- ledit microcanal est configuré pour être ouvert et fermé de manière réversible par les variations de volume du film perpendiculairement à son substrat.

7. Microcanal selon la revendication 6, dans lequel le polymère de type hydrogel est choisi parmi ceux sensibles aux variations de température, de lumière, de champ électrique ou de pH.

8. Microcanal selon l'une quelconque des revendications 6 ou 7, **caractérisé en ce qu'**il est configuré pour déplacer un fluide en ouvrant en fermant par biais des variations de volume du film.

9. Système microfluidique, **caractérisé en ce qu'**il comporte au moins un microcanal selon une quelconque des revendications 6 à 8.

## Patentansprüche

1. Verfahren zur Herstellung eines Mikrokanals, **dadurch gekennzeichnet, dass** es mindestens Folgendes umfasst:
- einen Schritt zur Befestigung, durch eine kovalente Verbindung, eines Polymers vom Typ Hydrogel auf einer Seite eines Substrats, wobei das Polymer vom Typ Hydrogel Volumenvariationen unter der Wirkung eines äußeren Stimulus erfahren kann;
- einen Schritt zur Bildung des Mikrokanals an der Schnittstelle zweier Werkstoffschichten, wobei mindestens einer der beiden Werkstoffe das Substrat ist, sodass das Polymer in dem Volumen des Mikrokanals angeordnet ist; und dadurch, dass:
- der Schritt des Befestigens des Polymers vor dem Schritt des Bildens des Mikrokanals realisiert wird;
- die Seite des Substrats flach ist;
- wobei die Volumenvariationen senkrecht zu der Seite des Substrats realisiert sind;
- wobei das Polymer den hydrodynamischen Widerstand des Mikrokanals umkehrbar modifiziert.

2. Verfahren nach Anspruch 1, wobei der Pfropfungsschritt zwei Phasen umfasst, eine Phase der chemischen Modifizierung des Polymers vom Typ Hydrogel und eine Phase der Modifizierung der chemischen Oberflächeneigenschaften des Substrats.

3. Verfahren nach einem der Ansprüche 1 oder 2, wobei dem Pfropfungsschritt eine Synthesephase des Polymers vom Typ Hydrogel vorangeht.

4. Verfahren nach Anspruch 3, wobei das Polymer vom Typ Hydrogel durch Vernetzung zwischen funktionalisierten Polymerketten synthetisiert wird, wobei die Synthese der Polymerketten durch radikalische Polymerisation erfolgt.

5. Verfahren nach einem der Ansprüche 2 bis 5, wobei die chemische Modifizierung der Polymerer eine Amidifizierung anhand eines Amins ist, das mindestens eine Vinylgruppe beinhaltet.

6. Mikrokanal (7, 17), der an der Schnittstelle zweier Werkstoffschichten mithilfe des Verfahrens nach einem der vorstehenden Ansprüche gebildet wird, wobei mindestens einer der beiden Werkstoffe ein Substrat (9, 14, 15, 16) ist, wobei ein Film (10) aus Polymer auf der Substratschicht in einem Volumen des Mikrokanals (7, 17) befestigt ist, wobei der Film aus Polymer aus einem Werkstoff vom Typ Hydrogel gebildet wird, der unter der Wirkung eines äußeren Stimulus Volumenvariationen erfahren kann,
**dadurch gekennzeichnet, dass**:
- das Substrat des Films flach ist;
- der Film durch kovalente Verbindung auf das flache Substrat gepfropft wird;
- der Film angepasst ist, um den hydrodynamischen Widerstand des Mikrokanals durch Aufquellen senkrecht zu seinem Substrat umkehrbar zu verändern;
- wobei der Mikrokanal konfiguriert ist, um in umkehrbarer Form durch Volumenvariationen des Films senkrecht zu seinem Substrat offen und geschlossen zu sein.

7. Mikrokanal nach Anspruch 6, wobei das Polymer vom Typ Hydrogel aus jenen ausgewählt wird, die empfindlich gegenüber Variationen von Temperatur, Licht, eines elektrischen Felds oder pH-Wertes sind.

8. Mikrokanal nach einem der Ansprüche 6 oder 7, **dadurch gekennzeichnet, dass** er konfiguriert ist, um ein Fluid durch Öffnen durch Schließen durch Volumenvariationen des Films zu transportieren.

9. Mikrofluidsystem, **dadurch gekennzeichnet, dass** es mindestens einen Mikrokanal nach einem der Ansprüche 6 bis 8 beinhaltet.

## Claims

1. Method for manufacturing a microchannel, **characterised in that** it comprises at least:
- a step of fastening via a covalent bond a polymer of the hydrogel type onto a face of a substrate, the polymer of the hydrogel type being capable of undergoing variations in volume under the action of an outside stimulus;
- a step of forming said microchannel at the interface of two layers of material, at least one of the two materials being the substrate, in such a way that the polymer is disposed in the volume of said microchannel;
and **in that**:
- the step of fastening the polymer is carried out before the step of forming the microchannel;
- said face of the substrate is flat;
- said variations in volume being carried out perpendicularly to said face of the substrate;
- the polymer modifying the hydrodynamic resistance of the microchannel in a reversible manner.

2. Method according to claim 1, wherein the step of grafting comprises two phases, a phase of chemical modification of the polymer of the hydrogel type and a phase of modification of the surface chemical properties of the substrate.

3. Method according to one of claims 1 or 2, wherein the step of grafting is preceded by a phase of synthesis of the polymer of the hydrogel type.

4. Method according to claim 3, wherein the polymer of the hydrogel type is synthesised by cross-linking between functionalised polymer chains, the synthesis of the polymer chains being carried out by free-radical copolymerisation.

5. Method according to one of claims 2 to 5, wherein the chemical modification of the polymers is an amidification via an amine including at least one vinyl group.

6. Microchannel (7, 17) formed at the interface of two layers of material using a method according to any one of the previous claims, at least one of the two materials being a substrate (9, 14, 15, 16), a film of polymer (10) being fastened onto the layer of substrate in a volume of the microchannel (7, 17), said film of polymer being formed from a material of the hydrogel type capable of undergoing variations in volume under the action of an outside stimulus,
**characterised in that**:
- the substrate of the film is flat;
- the film is grafted onto the flat substrate by a covalent bond;
- the film is adapted to reversibly modify the hydrodynamic resistance of the microchannel by inflating perpendicularly to its substrate;
- said microchannel is configured to be reversibly opened and closed by the variations in volume of the film perpendicularly to its substrate.

7. Microchannel according to claim 6, wherein the polymer of the hydrogel type is chosen from those sensitive to variations in temperature, in light, in electrical field or in pH.

8. Microchannel according to any one of claims 6 or 7, **characterised in that** it is configured to move a fluid by opening and closing via the variations in volume of the film.

9. Microfluidic system, **characterised in that** it includes at least one microchannel according to any one of claims 6 to 8.
